# EUROPEAN PATENT SPECIFICATION

(11) **EP 0 276 655 B1**
(45) Date of publication and mention of the grant of the patent: **05.05.1993**
(21) Application number: 88100119.2
(22) Date of filing: 07.01.1988
(51) Int. Cl.: C08J 3/03, C08J 3/26, C08L 9/00

(54) **Anionic micro gel particle dispersion and a coating composition therefrom**
Dispersion aus anionischen Mikrogelpartikeln und Beschichtungszusammensetzung daraus
Dispersion de particules d'un microgel anionique et composition de revêtement en contenant

(30) Priority: 07.01.1987 JP 1332/87; 07.01.1987 JP 1333/87; 07.01.1987 JP 1334/87; 07.01.1987 JP 1336/87; 07.01.1987 JP 1337/87; 07.01.1987 JP 1338/87; 07.01.1987 JP 1339/87
(43) Date of publication of application: 03.08.1988
(73) Proprietor: Nippon Paint Co., Ltd., Osaka-shi Osaka-fu (JP)
(72) Inventor: Tsuchiya, Yasuyuki, Hirakata-shi Osaka-fu (JP); Tobinaga, Kenshiro, Kawanishi-shi Hyogo-ken (JP)
(74) Representative: Hansen, Bernd, Dr. Dipl.-Chem.

(56) References cited:
- EP-A- 0 159 883
- CHEMICAL ABSTRACTS, vol. 100, 1984, page 95, abstract no. 193643b, Columbus, Ohio, US
- CHEMICAL ABSTRACTS, vol. 80, no. 24, 17th June 1974, page 98, abstract no. 135034m, Columbus, Ohio, US

## Description

The present invention relates to a process for preparing an anionic micro gel particle dispersion and a coating composition obtained therefrom.

It has been known to obtain a coated article having matted surface by electrocoating with an electrodepositable paint containing internally crosslinked micro resin particles (hereinafter referred to as "micro gel particles") prepared by polymerizing an ethylenically unsaturated monomer (see Japanese Patent Publication (unexamined) Nos. 93762/1983 and 49766/1981). The micro gel particles are advantageous not only in providing matted surfaces, but also in coating properties and throwing power.

The micro gel particles, however, should be mixed with a resin which is water-soluble or water-dispersible and which has electric charges necessary for electrodeposition if it is applied to electrocoating, because they do not have suitable electric charges and are insoluble in an aqueous medium. On the other hand, the micro gel particles deteriorate storage stability and workability of electrocoating and it is therefore difficult to formulate a paint in a large amount.

Japanese Patent Publication (unexamined) No. 31199/1986 discloses an electrocoating composition for providing a matted surface prepared by neutralizing a heat reaction product of an alpha, beta-ethylenically unsaturated polycarboxylic acid resin with an alkoxylated methylolmelamine. In this procedure, since the resin mixture is heated before uniformly emulsifying, it happens, when heating is conducted too much, that a resin having high molecular weight is obtained, which is therefore difficult to dissolve in water.

JP-A 73-93631 (CHEMICAL ABSTRACTS, vo. 80. no. 24, 17th June 1974, page 98, abstract no. 135034m) discloses that a reaction product of 1,2-polybutadiene, 1,4-polybutadiene, oil and alpha, beta-unsaturated dicarboxylic acid or its anhydride is mixed with an aqueous solution or dispersion of phenol-aldehyde resin and neutralized to form an electrocoating composition. The reaction product of the polybutadienes, oil and alpha, β-unsaturated dicarboxylic acid or its anhydride is not in the form of microgel particles, because the reaction is not conducted in an emulsion.

JP-A 58-197296 (CHEMICAL ABSTRACTS, vol. 100, 1984, page 95, abstract no. 193643b) discloses mat electrophoretic coatings on metals using water-thinned compounds of reaction products from an alpha, beta-unsaturated polycarboxylic acid resin and an alkoxymethyl melamine. The products are solutions and do not form microgel particles.

The present invention provides micro gel particles having an anionic charge so that they can be electrodeposited. According to the present invention, the micro gel particles are obtained in the form of an aqueous dispersion. The present invention provides a process for preparing an anionic micro gel particle dispersion wherein the micro gel particles have a crosslinked portion inside the particles comprising:
emulsifying in an aqueous medium a resin composition comprising
(A) 100 parts by weight of an anionic film-forming hydrophilic resin, and
(B) 10 to 250 parts by weight of a thermosetting crosslinking agent which can be self-crosslinked or crosslinked with said hydrophilic resin (A) in terms of condensation or addition reaction
excepting the combination of (meth)acrylic acid copolymer and an alkoxylated methylol melamine; parts by weight being based on the solid content of the resin composition, and
heating the resultant emulsion above the crosslinking temperature of said crosslinking agent (B).

The micro gel particles thus made have a crosslinked portion inside the particles and are covered with the aqueous resin over said crosslinked portion, whereby it seems that the micro gel particles have a shell-core construction wherein the core is the crosslinked portion and the shell is the aqueous resin. The micro gel particle is electrodepositable due to the anionic charge.

The present invention additionally provides an aqueous coating composition containing the above micro gel particles.

The anionic film-forming aqueous resin (A) is generally employed as a film-forming resin in the formulation of an anionic electrocoating composition. The resin (A) has an anionic functional group whereby the resin is negatively charged and has a hydrophilic nature. Examples of the anionic functional groups are a carboxyl group, a sulfonic acid group and a phosphate group. Such resins are known and all of them can be used in the present invention. Preferred anionic aqueous resins are a maleic natural or synthetic drying oil, maleic polybutadiene resin, a half ester or half amide thereof or an anionic acrylic resin.

The maleic oil can be prepared by reacting 30 to 300 mmol of maleic anhydride with 100 g of a natural or synthetic drying oil, or a natural or synthetic half-drying oil having an iodine value of not less than 100.

The maleic polybutadiene can be prepared by reacting 30 to 300 mmol of maleic anhydride with 100 g of a liquid polybutadiene having a molecular weight of 500 to 5,000.

The maleic oil and maleic polybutadien may be used in the form of a dicarboxyl type, a half ester type or a half amide type, which is generally obtained by reacting it with water, an alcohol or a primary or secondary amine.

The anionic acrylic resin can be prepared by copolymerizing a (meth)acrylate with an ethylenically unsaturated monomer having an acid group and optionally another ethylenically unsaturated monomer. Examples of the (meth)acrylates are methyl (meth)acrylate, ethyl (meth)acrylate, butyl (meth)acrylate, hexyl (meth)acrylate, 2-ethylhexyl (meth)acrylate, lauryl (meth)acrylate, 2-hydroxyethyl (meth)acrylate, and glycidyl (meth)acrylate. Examples of the ethylenically unsaturated monomers having an acid group are (meth)acrylic acid, crotonic acid, itaconic acid, maleic anhydride, sulfoacrylate and mono(2-hydroxyethylacrylate)acid phosphate. The other ethylenically unsaturated monomer which is an optional component includes styrene, vinyl toluene, acrylonitrile, acrylamide and vinyl acetate. Representative examples of the anionic acrylic resin are commercially available from Toray Industries Inc. as Coatax® WR-804, and Coatax® WE-832.

The thermosetting crosslinking agent, which can be self-crosslinked or crosslinked with the aqueous resin (A) in terms of condensation or addition reaction, includes melamine resins, methylolphenols and etherified methylolphenols.

The melamine resin may be a methylol type compound which is prepared by reacting melamine, benzoguanamine, acetoguanamine or a mixture thereof with formaldehyde. It may also be prepared by etherifying at least a portion of the methylol group of the methylol type compound with a lower alcohol having 1 to 4 carbon atoms.

The methylolphenols are those obtained by reacting phenols, such as phenol, p-cresol, p-t-butylphenol, amylphenol, p-phenylphenol and bisphenol A, with formaldehyde in the presence of an alkali catalyst. The etherified methylolphenols are generally prepared by partially or completely etherifying the phenolic OH group of the methylolphenols with a suitable etherifying agent. Examples of the etherifying agents are a monoepoxy compound, and a compound having the following formula:

R - X

wherein R represents methyl, allyl, benzyl or oxirane, and X represents a halogen atom. In case where the etherifying agent is the monoepoxy compound, the product reacted is beta-hydroxyphenol ether which is highly reactive and preferred.

The crosslinking agent (B) should be reactive at a temperature of less than about 100 °C at atmospheric pressure, because crosslinking reaction is conducted in an aqueous medium. However, if the reaction is conducted under pressure in an autoclave, the crosslinking agent may be one which is reactive at more than 100 °C.

It is noted that a combination of the acrylic resin and the alkoxylated methylol melamine should not be employed in the present invention, because the combination is insufficient in matted effects.

For lowering the viscosity of the resin composition of the hydrophilic resin (A) and the crosslinking agent (B) to emulsify with ease, the aqueous medium may further contain an organic solvent. Examples of the organic solvents are a water-miscible organic solvent, such as ethylene glycol monoethyl ether, ethylene glycol monopropyl ether, ethylene glycol monobutyl ether, methanol, ethanol, isopropyl alcohol, n-butanol, isobutanol, ethylene glycol dimethyl ether, diacetone alcohol, 4-methoxy-4-methylpentanone-2, acetone, methyl ethyl ketone, methoxy butanol, dioxane and ethylene glycol monoethyl ether acetate and a water-immiscible organic solvent, such as xylene, toluene, methyl isobutyl ketone, hexane, carbon tetrachloride, 2-ethylhexanol, isophorone, cyclohexane, and benzene.

For promoting the crosslinking reaction, the resin composition of the aqueous resin (A) and crosslinking agent (B) may further contain a catalyst. In case where the crosslinking agent is the melamine resin, preferred catalysts are dinonylnaphthalene sulfonic acid and dinonylnaphthalene disulfonic acid.

Where the resin composition containing the aqueous resin (A) and the crosslinking agent (B) is emulsified in an aqueous medium, at least 20 mol % of the acid group in the aqueous resin (A) is primarily neutralized with a base and it is emulsified together with the crosslinking agent (B) and the aqueous medium. The amount of the crosslinking agent (B) is 10 to 250 parts by weight per 100 parts by weight of the aqueous resin (A), which is calculated in terms of the solid content. The base for neutralizing the aqueous resin (A) includes ammonia, diethanolamine, triethanolamine, methylethanolamine, N,N-dimethylethanolamine, N,N-diethylethanolamine, diethylamine, triethylamine, morphorine and potassium hydroxide.

The aqueous medium is primarily water. It can contain a surfactant for facilitating emulsification. Examples of the surfactants are a nonionic surfactant, such as polyethylene glycol alkylphenyl ether, polyethylene glycol alkyl ether, polyoxyalkylene alkyl ether, polyethylene glycol sorbitane monostearate and polypropylene glycol polyethylene glycol ether; and an anionic surfactant, such as polyoxyethylene alkylphenyl ether sulfate ammonium salt and polyoxyethylene alkyl ether sulfate ammonium salt.

It is preferred that the solvent in the emulsion is azeotropically removed from the emulsion before or during the heating step. Removal of the solvent may facilitate the crosslinking reaction.

The emulsion thus obtained is heated to above the crosslinking. temperature at atmospheric pressure or under pressure in accordance with the sort of the crosslinking agent (B) to obtain an aqueous dispersion of the anionic micro gel particles of the present invention.

The micro gel particles have an electric charge on the surface and are stably dispersed in water due to their repulsion force. The obtained emulsion is stable to heat and therefore can smoothly proceed the crosslinking reaction of the crosslinking agent (B). The termination of crosslinking reaction can be identified by adding a solvent capable of dissolving the resin, such as tetrahydrofuran. When crosslinking reaction does not occur, the emulsion turns transparent, and if crosslinking reaction occurs, the solution turns turbid white. The obtained aqueous dispersion of the anionic micro gel particles can be used as such or the micro gel particles are isolated from the dispersion by vacuum drying.

In another embodiment of the present invention, solid particles are added to the emulsion before heating to form micro gel particles containing solid particles as a core. By this embodiment a micro gel particle dispersion is produced containing micro gel particles containing a solid particle therein as a core. The solid particle for this embodiment is a particle which is not dissolved by the crosslinking agent and an organic solvent therein and includes a pigment and crosslinked gel particles. Examples of the pigments are iron oxide, strontium chromate, zinc chromate, carbon black, titanium dioxide, talc, aluminum silicate, precipitated barium sulfate, basic lead sulfate, aluminum phosphomolybdate, a metallic pigment such as zinc powder, and an extender pigment.

The aqueous dispersion of the anionic micro gel particle itself can be used as an aqueous coating composition, especially an anionic electrocoating composition. The aqueous coating composition may further contain a water soluble or water dispersible anionic film-forming resin if desired. The coating composition may separately contain a pigment. Examples of the pigments are a color pigment, such as titanium dioxide, iron oxide red or carbon black; an extender pigment, such as aluminum silicate or precipitated barium sulfate and a corrosion-preventive pigment, such as aluminum phosphomolybdate, strontium chromate, basic lead silicate and lead chromate. The solid content of the electrocoating composition preferably adjusts to 10 to 20 % by weight. The electrocoating composition is generally electrodeposited to form a film having a dried thickness of 15 to 30µm (micron) and baked to cure.

### Examples

The present invention is illustrated by the following examples. In the examples, part and % are based on weight unless otherwise indicated.

### Production Example 1

### Maleic polybutadiene resin

A maleic polybutadiene resin was prepared from the following ingredients.

| Ingredients | Weight(g) |
|---|---|
| Nisseki Polybutadiene B-1500¹ | 1000 |
| Antigen® 6C² | 10 |
| Maleic anhydride | 250 |
| Deionized water | 20 |
| Diethylamine | 0.5 |
| Propylene glycol | 100 |
| Ethylene glycol monoethyl ether | 340 |

| | |
|---|---|
| ¹ Polybutadiene having Mn 1500, vinyl 65 %, trans 14 % and cis 16, available from Nippon Petrochemicals Co. Ltd. | |
| ² N-methyl-N'-(1,3-dimethylbutyl)-p-phenylenediamine available from Sumitomo Chemical Industries Inc. | |

Nisseki Polybutadiene B-1500 was charged in a 2 liter flask having a condenser to which Antigen® 6C and maleic anhydride were added. The content was kept at 190 to 200 °C with stirring to conduct an addition reaction of maleic acid to polybutadiene. After about 5 hours from the beginning of the heating, it was identified by a color reaction of dimethylaniline to finish the addition reaction. The reaction mixture was cooled to 100 °C, and a mixture of deionized water and diethylamine was added dropwise for about 30 minutes. After finishing the addition, mixing continued for about one hour to obtain an acid value of 140. Then, propylene glycol was added to the reaction mixture and the reaction was conducted at 110 °C for 3 hours to obtain an acid value of 125. Next, ethylene glycol monoethyl ether was added and mixed at 80 °C for about one hour to finish a synthesis. The obtained varnish had a nonvolatile content of 80 %.

### Production Example 2

### Beta-hydroxyphenol ether compound

Beta-hydroxyphenol ether compound was prepared from the following ingredients.

| Ingredients | Parts by weight |
|---|---|
| Tamanol® 722¹ | 60 |
| Butyl glycidyl ether | 23 |
| n-Butanol | 10 |
| Methoxybutanol | 10 |
| Dimethylbenzylamine | 0.4 |

| | |
|---|---|
| ¹ A resol type phenol resin available from Arakawa Kagaku K.K. | |

Tamanol® 722 was charged in a reaction vessel to which methoxybutanol and n-butanol were added and then butyl glycidyl ether was added. The content was mixed uniformly and the temperature rises to 100 °C, at which temperature dimethylbenzylamine was added to the content. Mixing was continued at 100 °C for 3 hour with paying attention to a rapid elevation of temperature, after which an amount of glycidyl group of the reaction product was measured to find less than 5 % of the charged amount. The content was cooled to conduct an analysis. The analysis showed that the phenolic OH groups disappeared and a beta-hydroxyphenol ether compound having a methylol group and a secondary alcohol group was obtained.

### Production Example 3

### Pigment paste

125 g of the maleic polybutadiene resin of Production Example 1 was mixed with 13 g of triethylamine and 250 g of deionized water was slowly added to uniformly dissolve to obtain a varnish having a nonvolatile content of about 26 %. To the varnish were added 150 g titanium dioxide, 50 g lead silicate, 25 g strontium chromate and 25 g carbon black and mixed by a dispergator for about one hour. Glass beads were added to the obtained mixture and ground to a particle size of 20µm (micron) by a sand mill, after which the glass beads were filtered and 1112 g of deionized water was added to obtain a pigment paste having a nonvolatile of 20 %.

### Example 1

### Resin emulsion I

An anionic micro gel particle dispersion was prepared from the following ingredients.

| Ingredients | Parts by weight | Solid content % |
|---|---|---|
| Maleic polybutadiene resin | 62.5 | 50 |
| U-ban 22R³ | 100 | 50 |
| Cobalt napthenate | 1.67 | 1.67 |
| Triethylamine | 6.1 | |
| Deionized water | 338 | |

| | | |
|---|---|---|
| ³ n-Butylated melamine resin available from Mitsuitoatsu Chemical Industries Inc. | | |

Maleic polybutadiene resin of Production Example 1 was mixed with U-ban 22R, cobalt naphthenate and triethylamine to form a mixture. Deionized water was added to the resultant mixture and emulsified to form an resin emulsion. While deionized water was further added, the solvent was removed under reduced pressure to form a resin emulsion I. A small portion of the resin emulsion I was added to 100 times amount of tetrahydrofuran to transparently dissolve.

The resin emulsion was allowed to stand at 95 °C for 3 hours and formed upon cooling an anionic micro gel particle dispersion. The dispersion did not dissolve in tetrahydrofuran but formed a turbid white solution.

A tin plate was dipped into the dispersion which was adjusted to a nonvolatile content of 10 %, and dried by air and then under reduced pressure. The obtained tin plate was observed by a microscope. The micro particles had a particle size of not more than 100 nm.

Anionic electrocoating was conducted using a degreased polished steel plate to be coated as an anode in the anionic micro gel particle solution thus obtained. The coated article was baked at 140 °C for 20 minutes to obtain a clear coating having a thickness of 20µm (micron). Gloss was evaluated by inserting light at an angle of 60 °. The result was shown in Table 1.

### Example 2

### Resin emulsion II

An anionic micro gel particle dispersion was prepared from the following ingredients.

| Ingredients | Parts by weight | Solid content % |
|---|---|---|
| Maleic polybutadiene resin | 62.5 | 50 |
| Beta-hydroxyphenol ether | 73.5 | 50 |
| compound | | |
| Cobalt naphthenate | 1.67 | 1.67 |
| Triethylamine | 6.1 | |
| Deionized water | 365 | |

The maleic polybutadiene resin of Production Example 1 was mixed with beta-hydroxyphenol ether, cobalt naphthenate and triethylamine to form a mixture. Deionized water was added to the resultant mixture and emulsified to form an resin emulsion. While deionized water was further added, the solvent was removed under reduced pressure to form a resin emulsion II. A small portion of the resin emulsion II was added to 100 times amount of tetrahydrofuran to transparently dissolve.

The resin emulsion was allowed to stand at 55 °C for 7 days and formed upon cooling an anionic micro gel particle dispersion. The dispersion did not dissolve in tetrahydrofuran but formed a turbid white solution. The dispersion was observed by a microscope. The micro particles had a particle size of not more than 100 nm.

Anionic electrocoating was conducted using a degreased polished steel plate to be coated as an anode in the anionic micro gel particle solution thus obtained. The coated article was baked at 170 °C for 20 minutes to obtain a clear coating having a thickness of 20µm (micron). Gloss was evaluated by inserting light at an angle of 60 °. The result is shown in Table 1.

### Example 3

Four hundred grams of the resin emulsion I was mixed with 100 g of the pigment paste of Production Example 3 at 95 °C for 3 hours and then cooled.

Anionic electrocoating was conducted using a degreased polished steel plate to be coated as an anode in the above composition. The coated article was baked at 140 °C for 20 minutes to obtain a coating having a thickness of 20µm (micron). Gloss was evaluated by inserting light at an angle of 60 °. The result is shown in Table 1.

### Example 4

### Resin emulsion III

An anionic micro gel particle dispersion was prepared from the following ingredients.

| Ingredients | Parts by weight | Solid content % |
|---|---|---|
| Coatex® WE-804⁴ | 91 | 50 |
| U-ban 22R | 100 | 50 |
| Triethylamine | 1.4 | |
| Deionized water | 357.1 | |

| | | |
|---|---|---|
| ⁴ A water-soluble anionic acrylic resin available from Toray Industries Inc. | | |

Cortax® WE-804 was mixed with U-ban 22R and triethylamine and emulsified with deionized water. While deionized water was further added, the solvent was removed under reduced pressure to form a resin emulsion III. A small portion of the resin emulsion III was added to 100 times amount of tetrahydrofuran to transparently dissolve.

The resin emulsion was kept warm at 55 °C for 7 days and then cooled to form an anionic micro gel particle dispersion. The dispersion did not dissolve in tetrahydrofuran but formed a turbid white solution. The dispersion was observed by a microscope. The micro particles had a particle size of not more than 100 nm.

Anionic electrocoating was conducted using a degreased polished steel plate to be coated as an anode in the anionic micro gel particle solution thus obtained. The coated article was baked at 140 °C for 20 minutes to obtain a clear coating having a thickness of 20µm (micron). Gloss was evaluated by inserting light at an angle of 60 °. The result was shown in Table 1.

### Example 5

### Resin emulsion IV

An anionic micro gel particle dispersion was prepared from the following ingredients.

| Ingredients | Parts by weight | Solid content % |
|---|---|---|
| Coatax® WE-804 | 91 | 50 |
| Beta-hydroxyphenol ether compound | 73.5 | 50 |
| Triethylamine | 1.4 | |
| Deionized water | 334 | |

Cortax® WE-804 was mixed with beta-hydroxyphenol ether compound of Production Example 2 and triethylamine and emulsified with deionized water. While deionized water was further added, the solvent was removed under reduced pressure to form a resin emulsion IV. A small portion of the resin emulsion IV was added to 100 times amount of tetrahydrofuran to transparently dissolve.

The resin emulsion was kept warm at 55 °C for 7 days and then cooled to form an anionic micro gel particle dispersion. The dispersion did not dissolve in tetrahydrofuran but formed a turbid white solution. The dispersion was observed by a microscope. The micro particles had a particle size of not more than 100 nm.

Anionic electrocoating was conducted using a degreased polished steel plate to be coated as an anode in the anionic micro gel particle solution thus obtained. The coated article was baked at 170 °C for 20 minutes to obtain a clear coating having a thickness of 20µm (micron). Gloss was evaluated by inserting light at an angle of 60 °. The result is shown in Table 1.

### Comparative Examples 1 and 2

Production and test were conducted as generally described in Example 1 with the exception that the resin emulsions I and II were not heated. By a dipping test using a tin plate, no micro particles are observed by a microscope. The result of the gloss test on an electrocoated plate is shown in Table 1.

### Comparative Example 3

One hundred gram of pigment paste of Production Example 3 was added to 400 g of the resin emulsion I which was not heated to form an anionic electrocoating composition. In the electrocoating composition, an article serving as an anode was electrocoated and then baked at 140 °C for 20 minutes to obtain a cured coating having a thickness of 20µm (micron). The same test as Example 1 was conducted and the result is shown in Table 1.

### Comparative Examples 4 and 5

Production and test were conducted as generally described in Example 1 with the exception that the resins emulsion III and IV were not heated. By a dipping test using a tin plate, no micro particles are observed by microscope. The result of the gloss test on an electrocoated plate is shown in Table 1.

**Table 1**

| Examples | 60° Gloss |
|---|---|
| 1 | 15 |
| 2 | 13 |
| 3 | 12 |
| 4 | 23 |
| 5 | 27 |
| Comparative Example 1 | 40 |
| 2 | 38 |
| 3 | 38 |
| 4 | 72 |
| 5 | 63 |

### Example 6

An anionic micro gel particle dispersion was prepared from the following ingredients.

| Ingredients | Parts by weight | Solid content % |
|---|---|---|
| Strontium chromate | 25 | 25 |
| U-ban 22R | 50 | 25 |
| Maleic polybutadiene resin | 62.5 | 50 |
| Cobalt napthenate | 1.67 | 1.67 |
| Triethylamine | 6.1 | |
| Deionized water | 363 | |

Strontium chromate was mixed with U-ban 22R compound and glass beads, and ground by a sand mill. Maleic polybutadiene resin, cobalt naphthenate and triethylamine were added and then emulsified by adding deionized water. Deionized water was further added to the emulsion, while the solvent was removed under reduced pressure. The resultant resin emulsion V was allowed to stand at 55 °C for 7 days and then cooled to form an anionic micro gel particle dispersion.

The dispersion was rinsed with a large amount of tetrahydrofuran. A tin plate was dipped in the dispersion and dried by air and then under reduced pressure. The obtained tin plate was observed by a microscope. The micro particles covered the strontium chromate particles with a crosslinked resin layer.

The emulsion which was not heated was added to a large amount of tetrahydrofuran and strontium chromate having no cover layer was observed by a microscope.

### Example 7

An anionic micro gel particle dispersion was prepared from the following ingredients.

| Ingredients | Parts by weight | Solid content % |
|---|---|---|
| Zinc powder | 25 | 25 |
| U-ban 22R | 50 | 25 |
| Maleic polybutadiene resin | 62.5 | 50 |
| Cobalt napthenate | 1.67 | 1.67 |
| Triethylamine | 6.1 | |
| Deionized water | 363 | |

Strontium chromate was mixed with U-ban 22R compound and glass beads, and ground by a sand mill. Maleic polybutadiene resin, cobalt naphthenate and triethylamine were added and then emulsified by adding deionized water. Deionized water was further added to the emulsion, while the solvent was removed under reduced pressure. The resultant resin emulsion E was allowed to stand at 55 °C for 7 days and then cooled to form an anionic micro gel particle dispersion.

The dispersion was rinsed with a large amount of tetrahydrofuran and added to 1N hydrochloric acid. Hydrogen gas was not produced. The dispersion was added to a large amount of tetrahydrofuran to rinse. A tin plate was dipped in the dispersion and dried by air and then under reduced pressure. The obtained tin plate was observed by a microscope. The micro particles covered the zinc powder with a crosslinked resin layer.

The emulsion which was not heated was rinsed with a large amount of tetrahydrofuran and added to 1N hydrochloric acid. No hydrogen gas was produced. According to the observation by a microscope, zinc powder which had no resin layer was observed.

### Example 8

An anionic micro gel particle dispersion was prepared from the following ingredients.

| Ingredients | Parts by weight | Solid content % |
|---|---|---|
| Strontium chromate | 25 | 25 |
| Beta-hydroxyphenol ether compound | 36.75 | 25 |
| Maleic polybutadiene resin | 62.5 | 50 |
| Cobalt napthenate | 1.67 | 1.67 |
| Triethylamine | 6.1 | |
| Deionized water | 376 | |

The procedure was conducted as generally described in Example 6 with the exception that 50 parts by weight of U-ban 22R was changed to 36.75 parts by weight of beta-hydroxyphenyl ether compound of Production Example 2 and an amount of deionized water was changed to 376 parts by weight. The obtained dispersion paste had the same properties as Example 6.

## Claims

1. A process for preparing an anionic micro gel particle dispersion wherein the micro gel particles have a crosslinked portion inside the particles comprising:
emulsifying in an aqueous medium a resin composition comprising
(A) 100 parts by weight of an anionic film-forming hydrophilic resin, and
(B) 10 to 250 parts by weight of a thermosetting crosslinking agent which can be self-crosslinked or crosslinked with said hydrophilic resin (A) in terms of condensation or addition reaction
excepting the combination of (meth)acrylic acid copolymer and an alkoxylated methylol melamine; parts by weight being based on the solid content of the resin composition, and
heating the resultant emulsion above the crosslinking temperature of said crosslinking agent (B).

2. The process according to Claim 1 wherein the hydrophilic resin (A) is selected from the group consisting of maleic oil and maleic polybutadiene resin.

3. The process according to Claim 1 wherein the crosslinking agent (B) is a methylol phenol obtained by reacting phenols with formaldehyde.

4. The process according to Claim 3 wherein the methylol phenol is a beta-hydroxyphenol ether.

5. The process according to Claim 1 wherein the heating is conducted at or above atmospheric pressure.

6. The process according to Claim 1 wherein the emulsion additionally comprises an organic solvent which is removed before or during the heating step.

7. The process according to Claim 1 wherein the emulsion further comprises solid particles.

8. The process according to Claim 7 wherein the solid particles are pigments or metal particles.

9. Micro gel particles made by the process of claim 1 or 8 after the particles have been isolated from the dispersion.

10. An aqueous coating composition comprising the anionic micro gel particle dispersion made by the process according to claim 1.

## Patentansprüche

1. Verfahren zur Herstellung einer anionischen Mikrogelteilchendispersion, in welcher die Mikrogelteilchen im Inneren der Teilchen einen vernetzten Anteil haben, umfassend:
Emulgieren in einem wäßrigen Medium einer Harzzusammensetzung umfassend
(A) 100 Gewichtsteile eines anionischen filmbildenden hydrophilen Harzes, und
(B) 10 bis 250 Gewichtsteile eines wärmehärtbaren Vernetzungsmittels, welches selbstvernetzend ist, oder mit dem hydrophilen Harz (A) durch Kondensation oder Additionsreaktion vernetzt, ausgenommen
die Kombination von (Meth)acrylsäurepolymer und einem alkoxylierten Methylolmelamin; wobei die Gewichtsteile auf den Feststoffgehalt der Harzzusammensetzung bezogen sind, und
Erhitzen der sich ergebenden Emulsion oberhalb der Vernetzungstemperatur des Vernetzungsmittels (B).

2. Verfahren gemäß Anspruch 1, bei dem das hydrophile Harz (A) ausgewählt ist aus der Gruppe bestehend aus Maleinsäureöl und Maleinsäure-Polybutadienharz.

3. Verfahren gemäß Anspruch 1, bei dem das Vernetzungsmittel (B) ein Methylolphenol, erhalten durch Umsetzen von Phenolen mit Formaldehyd ist.

4. Verfahren gemäß Anspruch 3, bei dem das Methylolphenol ein β-Hydroxyphenolether ist.

5. Verfahren gemäß Anspruch 1, bei dem man das Erhitzen bei oder oberhalb Atmosphärendruck durchführt.

6. Verfahren gemäß Anspruch 1, bei dem die Emulsion zusätzlich ein organisches Lösungsmittel, welches vor oder während der Erhitzungsstufe entfernt wird, umfaßt.

7. Verfahren gemäß Anspruch 1, bei dem die Emulsion weiterhin feste Teilchen umfaßt.

8. Verfahren gemäß Anspruch 7, bei dem die festen Teilchen Pigmente oder Metallteilchen sind.

9. Mikrogelteilchen, hergestellt nach dem Verfahren gemäß Anspruch 1 oder 8, nachdem die Teilchen von der Suspension abgetrennt worden sind.

10. Wäßrige Überzugszusammensetzung, umfassend die anionische Mikrogelteilchendispersion, hergestellt nach dem Verfahren gemäß Anspruch 1.

## Revendications

1. Procédé de préparation d'une dispersion de particules de microgel anionique dans lequel les particules de microgel ont une partie réticulée à l'intérieur des particules, dans lesquel :
on émulsionne dans un milieu aqueux une composition de résine comprenant.
(A) 100 parties en poids d'une résine hydrophile formant pellicule anionique, et
(B) de 10 à 250 parties en poids d'un agent réticulant thermodurcissable qui peut-être auto-réticulé ou réticulé avec ladite résine hydrophile (A) en termes de réaction de condensation ou d'addition sauf pour la combinaison d'un copolymère d'acide (méth)acrylique et d'une méthylol mélamine alcoxylée ; les parties en poids étant exprimées par rapport à la teneur en solide de la composition de résine, et
on chauffe l'émulsion résultante au-dessus de la température de réticulation dudit agent de réticulation (b).

2. Procédé selon la revendication 1 dans lequel la résine hydrophile (A) est choisie dans le groupe constitué par une huile maléique et une résine polybutadiène maléique.

3. Procédé selon la revendication 1 dans lequel l'agent réticulant (B) est un méthylol phénol obtenu en faisant réagir des phénols avec du formal-déhyde.

4. Procédé selon la revendication 3 dans lequel le méthylol phénol est un éther de bêta-hydroxy-phénol.

5. Procédé selon la revendication 1 dans lequel on procède au chauffage à une pression égale ou supérieure à la pression atmosphérique.

6. Procédé selon la revendication 1 dans lequel l'émulsion comprend en outre un solvant organique qui est éliminé avant ou pendant l'étape de chauffage.

7. Procédé selon la revendication 1 dans lequel l'émulsion comprend en outre des particules solides.

8. Procédé selon la revendication 7 dans lequel les particules solides sont des pigments ou des particules métalliques.

9. Particules de microgel préparées selon le procédé de la revendication 1 ou 8 après que les particules aient été isolées de la dispersion.

10. Composition aqueuse de revêtement comprenant la dispersion de particules de microgel anionique préparée par le procédé selon la revendication 1.
